# EUROPÄISCHE PATENTSCHRIFT

(11) **EP 2 225 980 B1**
(45) Veröffentlichungstag und Bekanntmachung des Hinweises auf die Patenterteilung: **19.10.2011**
(21) Anmeldenummer: 10155031.7
(22) Anmeldetag: 01.03.2010
(51) Int. Cl.: A47J 42/04

(54) **Mühle, insbesondere Gewürzmühle**
Mill, in particular spice mill
Moulin, notamment moulin à épices

(30) Priorität: 03.03.2009 DE 102009011391
(43) Veröffentlichungstag der Anmeldung: 08.09.2010
(73) Patentinhaber: STOHA design Richard Hieber KG, 86928 Hofstetten (DE); MKS Kunststoffspritzguss GmbH, 86928 Lüdenscheid (DE)
(72) Erfinder: Bonsen, Horst, 69469, Weinheim (DE)
(74) Vertreter: Jordan, Volker Otto Wilhelm

(56) Entgegenhaltungen:
- DE-A1- 4 239 372
- DE-U1- 8 528 263
- DE-U1-202007 001 563

## Beschreibung

Die Erfindung betrifft eine Mühle mit einem Gehäuse zur Aufnahme von Mahlgut, insbesondere Gewürzen, wie etwa Salz, Pfeffer oder ähnlichem, und einem an einem Ende des Gehäuses angeordneten Mahlwerk, das über eine Spindel mit einem am anderen Ende des Gehäuses angeordneten Mühlenkopf manuell antreibbar ist. Zum Befüllen der Mühle wird der Mühlenkopf vom Gehäuse abgenommen.

Eine Mühle der oben genannten Art ist z. B. aus der DE 20 2007 001 563 U1 bekannt. Dort ist der Mühlenkopf in einer Hülse des Mühlengehäuses mittels einer Vielzahl von über den Umfang verteilten Rastzugen drehbar aber axial fest verrastet. Da die Rastzungen elastisch vorgespannt sind, kann eine gewisse Schwergängigkeit beim Drehen des Mühlenkopfs nicht ausgeschlossen werden. Auch ist die axiale Führung des Mühlenkopfs durch die Rastzungen nicht immer ausreichend genau.

Auch sind derartige Mühlen handelsüblich, bei denen der Mühlenkopf mittels einer Gewindemutter an der Spindel axial festgelegt ist, und durch Verstellen der Gewindemutter und somit des axialen Abstands zwischen Mühlenkopf und Mahlwerk der Mahlspalt eingestellt wird. Hierbei ist das axiate Spiel des Mühlenkopfs relativ zum Gehäuse von der Einstellung des Mahlspalts abhängig.

Eine Mühle gemäß dem Oberbegriff des Anspruchs 1 ist aus DE 85 28 263 U1 bekannt. Die in den Figuren gezeigte Mühle weist sich in Umfangsrichtung und nach radial innen erstreckende, umlaufende Rippen auf, die in bestimmten relativen Drehstellungen des Mühlenkopfes relativ zum Mühlengehäuse durch als Durchstecköffnungen dienende Lücken zwischen sich in Umlaufrichtung und nach radial außen erstreckenden Rippen des Mühlengehäuses durchtreten können.

Ferner ist als Stand der Technik zu verweisen auf die DE 42 39 372 A1, die eine einschlägige Mühle offenbart.

Aufgabe der Erfindung ist, eine Mühle der angesprochenen Art bereitzustellen, bei der der Mühlenkopf leicht aufgenommen und wieder aufgesetzt werden kann und im aufgesetzten Zustand ausreichend genau geführt ist.

Zur Lösung der Aufgabe wird die Mühle mit den Merkmalen des Anspruchs 1 bereitgestellt.

Durch den Eingriff der Nase in die Umfangsnut wird der Mühlenkopf am Gehäuse axial ausreichend genau geführt, wobei die Führungsgenauigkeit nicht von etwaigen Federkräften abhängig ist, wie in der oben genannten DE 20 2007 001 563 U1, und auch nicht von der Mahlspalteinstellung. Um den Mühlenkopf vom Gehäuse abzumehmen, braucht man ihn nur unter leichtem Zug nach Art einer Bajonettkupplung so weit drehen, dass die Nase in den Durchgang rutscht, so dass der Mühlenkopf abgenommen werden kann, um z. B. Mahlgut nachzufüllen.

Erfindungsgemäβ bildet der Durchgang eine sich schräg zur Umfangsnut erstreckende Gewindenut, in der durch Drehung des Mühlenkopfs die Nase in die und aus der Umfangsnut geführt wird. Hierdurch wird verhindert, dass dann, wenn der Mühlenkopf eine derartige Drehstellung hat, dass die Nase in den Durchgang einzutreten beginnt, sich der Mühlenkopf ohne zusätztiche Drehung unbeabsichtigt vom Gehäuse lösen kann, da erst eine weitere Drehung, in der die Nase durch die Gewindenut gleitet, zum vollständigen Lösen des Mühlenkopfs vom Gehäuse führt.

Die bei solchen Mühlen üblicherweise verwendeten Mahlwerke haben eine Hauptmahlrichtung, in der die Mahlzähne vorrangig in das Mahlgut eingreifen, während in der Gegendrehrichtung die Mahlleistung deutlich geringer ist. Üblicherweise weist die Hauptmahlrichtung im Uhrzeigersinn. Wenn nun die Drehrichtung, mit der die Nase in die Umfangsnut hineingeführt wird, der Hauptmahlrichtung des Mahlwerks entspricht, kann sicher verhindert werden, dass beim Mahlbetrieb die Nase unbeabsichtigt in den Durchgang gelangt, da die Nase bei dieser Drehrichtung durch den Drehsinn des Gewindes immer in die Umfangsnut hineingeführt wird. Nur bei Drehung des Mühlenkopfs entgegen der Hauptmahlrichtung kann die Nase durch den Durchgang gleiten und somit der Mühlenkopf vom Gehäuse gelöst werden.

Eine präzise Führung der Nase sowohl in der Umfangsnut als auch in dem Durchgang - und somit eine präzise Führung des Mühlenkopfs am Gehäuse - erreicht man, wenn, bezogen auf die Spindelachse im achsenthaltenden Längsschnitt der Mühle betrachtet, die Querschnitte der Nase, der Umfangsnut und der Gewindenut im Wesentlichen gleich sind.

Der Führungspräzision kommt weiter zugute, wenn die einander gegenüberliegenden Flanken von Umfangsnut und Gewindenut von ihren jeweiligen Nutböden weg divergieren.

Bevorzugt weist die Nase zwei parallel achsnormal ausgerichtete erste Führungsflächen zum Eingriff mit der Umfangsnut und zwei parallel schräg ausgerichtete zweite Führungsflächen zum Eingriff mit der Gewindenut auf. Hierdurch wird die Nase sowohl in der Umfangsnut als auch im Durchgang durch langgestreckte Eingriffsflächen geführt, so dass es auch bei lang dauerndem Betrieb zu keiner nennenswerten Abnutzung der Nasenflanken kommt.

Wenn dabei eine in Umfangsrichtung erstreckende Scheitellinie der Nase glattgängig oder flachwinklig in die Fläche, von der die Nase vorsteht, übergeht, lässt sich beim Abnehmen und Aufsetzen des Mühlenkopfs die Nase glattgängig in die Gewindenut führen.

Eine gleichmäßige Lastverteilung und gleichmäßige und verwackelungsfreie Führung des Mühlenkopfs erreicht man, wenn über den Umfang der Mühle eine Mehrzahl von Nasen und eine entsprechende Mehrzahl von Durchgängen bzw. Gewindenuten verteilt sind.

Bevorzugt steht die zumindest eine Nase von einer Umfangsschürze ab, die beim Aufsetzen des Mühlenkopfs auf das Gehäuse mit dem Umfang des die Umfangsnut tragenden Bauteils in Eingriff tritt, bevor die Nase in den Durchgang bzw. die Gewindenut gelangt. Hierdurch wird beim Zusammenbau der Mühlenkopf durch die Umfangsschürze relativ zum Gehäuse geführt, bevor die zumindest eine Nase in den Durchgang gelangt, was das Einfädeln der Nase in den Durchgang und somit das Wiederaufsetzen des Mühlenkopfs erleichtert.

Wenn die Spindel mit dem Mühlenkopf axial verschiebbar aber drehfest in Eingriff steht, kann die axiale Stellung der Spindel relativ zum Mühlengehäuse und somit die Mahlspalteinstellung unverändert bleiben, während der Mühlenkopf aufgesetzt wird und dabei mit der Spindel in Eingriff tritt, um im Betrieb die Mahldrehkräfte übertragen zu können.

Um beim Zusammenbau das axiale Einführen des oberen Spindelendes in die gegenüberliegende Aufnahme des Mühlenkopfs zu erleichtern, wird vorgeschlagen, dass die Spindel an dem Mühlenkopf an dem Gehäuse zumindest ein Stützelement radial abgestützt ist. Hierdurch bleibt das obere Spindelende auch bei gelöstem Mühlenkopf axial zentriert, was das Einführen des oberen Spindelendes in den Mühlenkopf beim Aufsetzen des letzteren erleichtert. Wenn eine Vielzahl von solchen Stützelementen über den Umfang verteilt sind, können sich zwischen diesen Stützelementen Öffnungen zum Einfüllen von Mahlgut befinden.

Bevorzugt ist die Umfangsnut in der Außenumfangsfläche des Gehäuses und die zumindest eine Nase an einer Innenumfangsfläche einer das Gehäuse übergreifenden Umfangsschürze des Mühlenkopfs vorgesehen. Grundsätzlich bestünde aber auch die Möglichkeit, die Umfangsnut an der Innenumfangsfläche der Umfangsschürze und die Nase an der Außenumfangsfläche des Gehäuses anzuordnen, oder aber die Umfangsnut an einer Innenumfangsfläche des Gehäuses vorzusehen, und die Nase an einem in das Gehäuse eintauchenden Teil des Mühlenkopfes anzuordnen, oder umgekehrt die Nase an der Innenumfangsfläche des Gehäuses und die Umfangsnut an dem eintauchenden Teil.

In einer bevorzugten Ausführung weist das Gehäuse ein ggf. durchsichtiges Mantelrohr auf, mit dessen einem Ende das Mahlwerk lösbar verbunden ist und mit dessen anderem Ende ein die Umfangsnut und ggf. das Stützelement für die Spindel aufweisender Ringkörper fest verbunden ist. Hierbei kann dann das Mahlwerk einen Mahlkegel aufweisen, der in einen am Gehäuse drehfest gehaltenen Mahlring eintaucht und der zur Einstellung der Eintauchtiefe und somit des Mahlspalts relativ zum Mahlring axial verlagerbar ist. Es kann ein Einstellring vorgesehen sein, der mit dem einen Ende des Gehäuses in Gewindeeingriff steht und den Mahlkegel relativ drehbar aber axial fest hält, so dass durch relative Verdrehung des Einstellrings zum Gehäuse der Mahlkegel axial verlagert und hierdurch der Mahlspalt eingestellt wird.

Dies erlaubt eine Montage des Mahlkegels und eine Einstellung des Mahlspalts mit Hilfe des Einstellrings, unabhängig von dem Montagezustand oder der Einstellung des Mühlenkopfs. Im Übrigen kann sich der Einstellring so weit über das Mahlwerk nach unten erstrecken, dass er zugleich einen Standfuß für die Mühle bildet.

Die Erfindung wird nachfolgend anhand eines Ausführungsbeispiels unter Hinweis auf die beigefügten Zeichnungen beschrieben.
- Fig. 1: zeigt eine perspektivische Außenansicht einer erfindungsgemä- β en Mühle;
- Fig. 2: zeigt die Mühle mit abgenommenem Mühlenkopf, der geschnit- ten dargestellt ist;
- Fig. 3: zeigt einen achsenthaltenden Längsschnitt durch die erfindungs- gemäße Mühle mit teilweise aufgesetztem Mühlenkopf; und

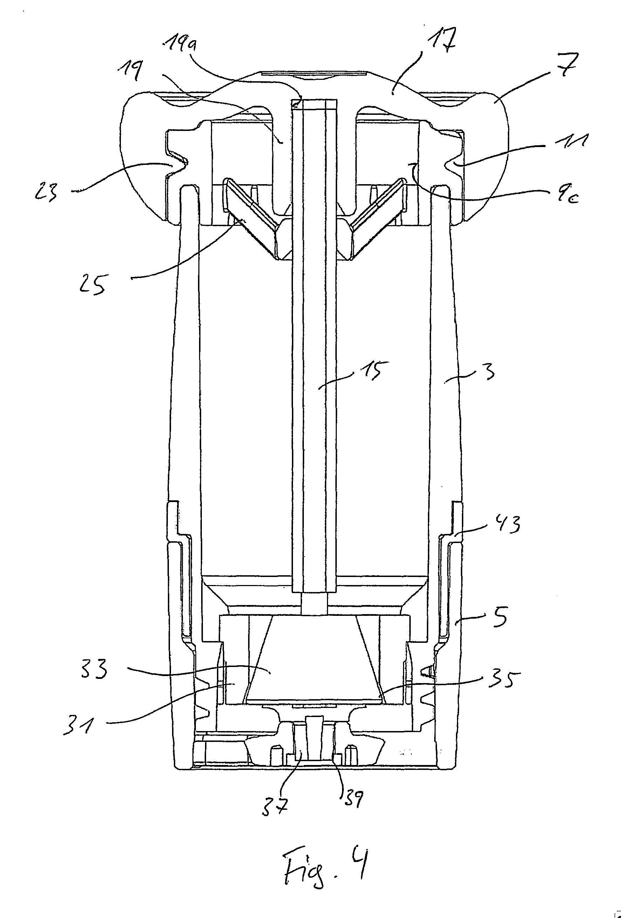

- Fig. 4: zeigt einen Schnitt durch die Mühle gemäß Fig. 3 mit vollständig aufgesetztem Mühlenkopf.

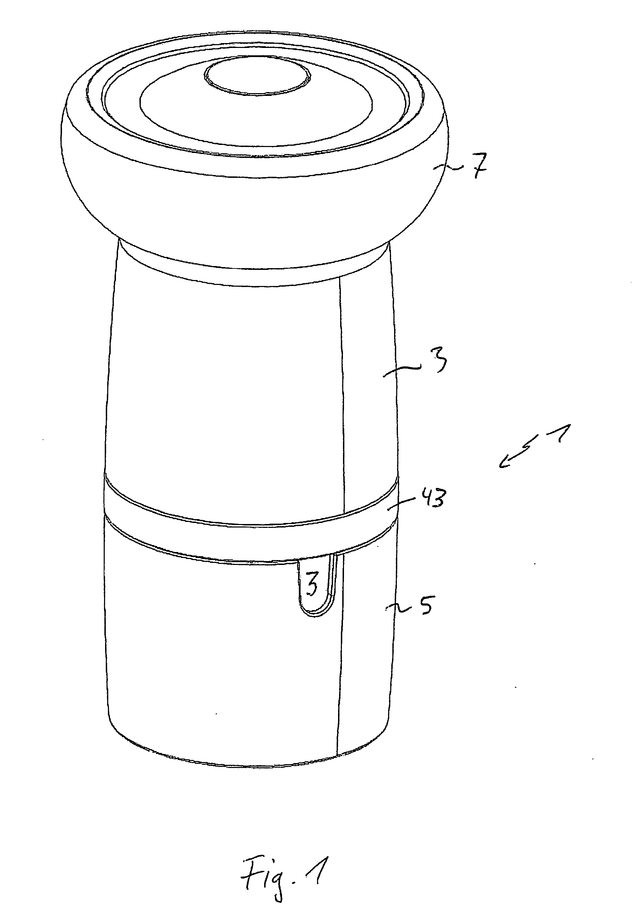

Fig. 1 zeigt eine Mühle 1, z. B. Pfeffer- oder Salzmühle, mit einem rohrförmigen, angenähert zylindrischen, ggf. transparenten Mantelrohr oder Gehäuse 3, an dessen unteren Ende ein Mahlwerkeinstellring 5 drehbar angebracht ist - welcher zugleich als Standfuß für die Mühle 1 dient, und an dessen oberen Ende ein radial überstehender und als Drehgriff dienender Mühlenkopf 7 um die Längsachse A-A der Mühle 1 drehbar gelagert ist. Die hier gezeigte Mühle 1 ist zu ihrer Längsachse A-A im Wesentlichen rotationssymmetrisch.

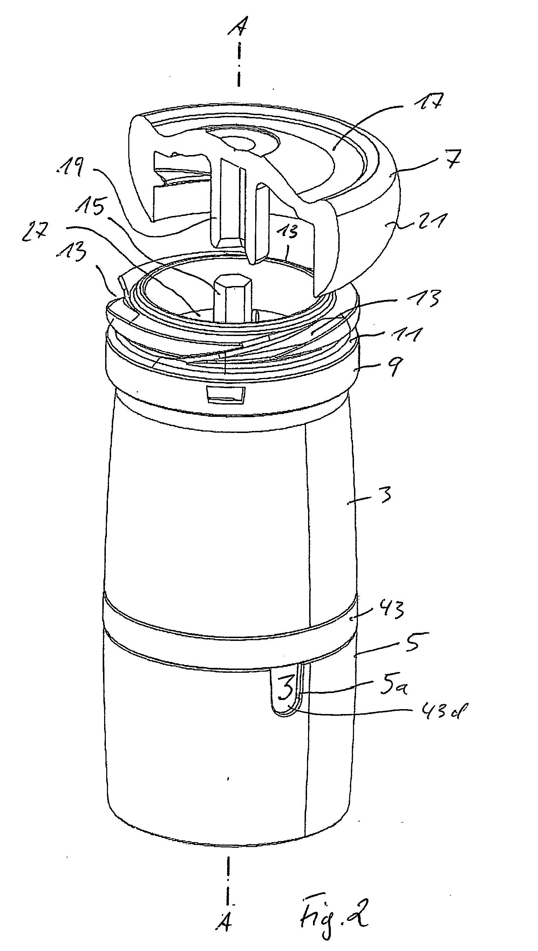

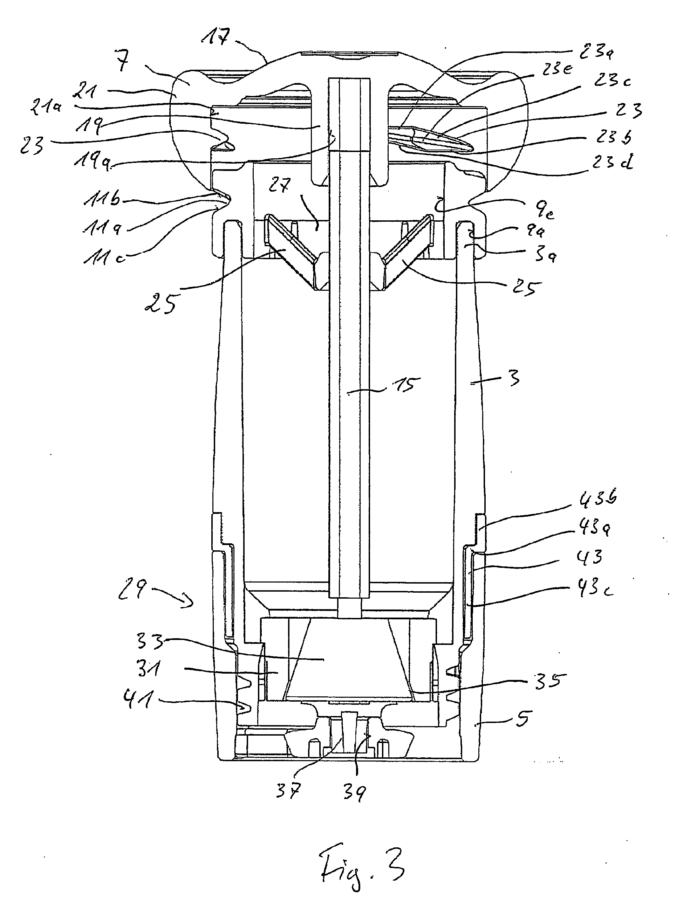

Fig. 2 zeigt die Mühle 1 mit abgenommenem Mühlenkopf 7, wobei der Mühlenkopf 7 im achsenthaltend geschnitten dargestellt ist. Am kopfseitigen oberen Ende des Gehäuses 3 ist ein Ringelement 9 starr befestigt, wobei gemäß Fig. 3 der obere Rand 3a des Gehäuses 3 in einer nach unten offenen Ringnut 9a des Ringelements 9 sitzt. In der Außenumfangsfläche 9b des Ringelements 9 befindet sich eine in einer achsnormalen Ebene ringförmig umlaufende Umfangsnut 11, hier mit V-förmigem Querschnitt, d. h. mit vom Nutboden 11a divergierenden oberen und unteren Flanken 11 b, 11 c. Von dieser Umfangsnut 11 führen - gemäß Fig. 3 - sich zum Oberende des Ringelements 9 öffnende, nach Art eines Gewindes, hier Rechtsgewindes, schräg gestellte Durchtrittsnuten 13, hier drei solche Durchtrittsnuten 13, die über den Umfang des Ringelements 9 gleichmäßig verteilt sind. Im achsenthaltenden Längsschnitt betrachtet entspricht die Querschnittsform der Durchtrittsnuten 13 jener der Umfangsnut 11.

Durch die Mittelöffnung 9c des Ringelements 9 und das Gehäuse 3 erstreckt sich ein mit dem später zu beschreibenden Mahlwerk drehfest gekoppelte Antriebsspindel 15.

Der Mühlenkopf 7 hat einen scheibenförmigen Hauptkörper 17, von dem mittig nach unten ein hülsenförmiger Mitnehmer 19 absteht, zum drehfesten aber axial verschiebbaren Eingriff mit der Antriebsspindel 15. Zur Drehmomentübertragung haben die Spindel 15 und der Innenumfang 19a der Mitnehmerhülse 19 einen vieleckigen, hier sechseckigen Querschnitt, wobei aber auch andere Querschnittsformen denkbar wären, so lange sie ein Drehmoment übertragen können.

Vom Außenumfang des Hauptkörpers 17 erstreckt sich nach unten, in Richtung zum Mahlwerk hin, eine Umfangsschürze 21, von deren Innenumfang 21a eine der Anzahl der Durchtrittsnuten 13 entsprechende Anzahl von Nasen 23 - also hier drei Nasen 23 - radial einwärts vorstehen. Diese Nasen 23 haben - in Draufsicht radial auswärts betrachtet - eine angenähert parallelogramm- oder rautenförmige Kontur mit zwei parallelen, sich in Umfangsrichtung erstreckenden Flächen 23a, 23b zum flächigen Eingriff mit den Flanken 11 b, 11 c der Umfangsnut 11, und zwei weiteren zueinander parallelen schrägen Flächen 23c, 23d, deren Steigungswinkel dem Gewindesteigungswinkel der Durchtrittsnuten 13 entspricht.

Die sich angenähert in der Umfangsrichtung erstreckende und durch die einander angrenzenden Flächen 23a, 23b, 23c und 23d entstehende Scheitellinie 23e der Nase 23 geht glattgängig stufenlos oder mit flachem Winkel in die Innenumfangsoberfläche 21a der Umfangsschürze 21 über.

Zum Öffnen der Mühle 1, etwa zum Nachfüllen von Gewürz, wird der Mühlenkopf 7 unter leichtem axialen Zug gegen den Uhrzeigersinn gedreht, bis sich die Nasen 23 in den Durchtrittsnuten 13 fangen und somit aus der Umfangsnut 11 herausgeführt werden und schließlich aus den oberen Enden der Durchtrittsnuten 13 vollständig heraustreten. Hierbei bleibt die Spindel 15 in der Mühle, da sie in dem Innenumfang 19a mit der Mitnehmerhülse 19 axial frei gleiten kann.

Übrigens sind die Gewindesteigung der Durchtrittsnuten 13, die Umfangslänge der Durchtrittsnuten 13 und die Umfangslänge der Nasen 23 so eingestellt, dass etwa eine drittel bis eine halbe Umdrehung des Mühlenkopfes 7 genügt, um diesen vom Mühlengehäuse 3 vollständig zu lösen. Die Erfindung soll aber darauf nicht beschränkt sein, wobei der Drehwinkel zum Abnehmen des Mühlenkopfes 7 auch kleiner oder größer als die oben genannten Drehwinkel sein kann.

Wenn man zum Verschließen der Mühle 1 dann den Mühlenkopf 7 axial auf den Ringkörper 9 zubewegt, gelangt zunächst die Innenumfangsfläche 21 a der Umfangsschürze 21 mit dem Außenumfang 9a des Ringkörpers 9 in Eingriff, wodurch diese beiden Teile relativ zueinander zentriert und ausgerichtet werden, und dabei auf die Spindel 15 in die Mitnehmerhülse 19 eingreift. Erst dann gelangen die Nasen 23 in eine axiale Position, in der sie in die jeweiligen Durchtrittsnuten 13 eingreifen können. Hierzu braucht man den Mühlenkopf 7 nur wieder im Uhrzeigersinn so weit zu drehen, bis sich die Nasen 23 in den gewindeartig schräg gestellten Durchtrittsanuten 23 fangen hierdurch zwangsweise in die Umfangsnut 11 geführt werden, wodurch die Mühle 1 wieder betriebsbereit ist.

Die Spindel 15 ist am Oberende, unterhalb der Mitnehmerhülse 19 des Mühlenkopfs 7 hier durch drei über den Umfang verteilte Stützstreben 25 radial abgestützt, welche zwischen sich Öffnungen 27 zum Nachfüllen des Mahlguts in das Gehäuse 3 freilassen.

Das Mahlwerk 29 umfasst einen im Unterende des Gehäuses 3 befestigten Mahlring 31, der mit einem in ihn eingesetzten nach oben hin verjüngten Mahlkegel 33 einen ringförmigen Mahlspalt 35 bildet. Der Mahlkegel 33 trägt an seiner Unterseite einen zur Längsachse A-A koaxialen Lagerzapfen 37, der in einer zentralen Lagerbohrung 39 des Einstellrings 5 drehbar aber axial fest gelagert ist. Der Einstellring 5 steht über ein Gewinde 41 mit dem Auβenumfang vom Unterende des Gehäuses 3 in Gewindeeingriff. Die Spindel 15 steht mit dem Mahlkegel 33 drehfest in Eingriff. Durch Drehung des Einstellrings 5 verändert sich, wegen des Gewindes 41 und wegen der axial festen Führung des Lagerzapfens 37 in der Lagerbohrung 39, die axiale Position des Mahlkegels 33 und somit die Breite des Mahlspalts 35. Die damit einhergehende axiale Verlagerung der Spindel 15 wird durch die freie axiale Verschiebbarkeit in der Mitnehmerhülse 19 des Mühlenkopfs 7 aufgenommen.

Das Mahlwerk kann auch gemäß der DE 20 2007 001 536 U1 aufgebaut sein.

Hier ist der Einstellring 5 am Außenumfang 3b des Gehäuses 3 über einen zwischenliegenden Skalierungsring 43 gelagert, dessen Durchmesser oben über eine Ringstufe 43a erweitert ist, so dass nur der oberhalb der Ringstufe 43a befindliche Teil 43b des Skalierungsrings 43 nach außen hin frei liegt.

Der Skalierungsring 43 trägt am Außenumfang seines vom Einstellring 5 überdeckten Teils 43c eine Skalierung 43d (Fig. 2), von der nur ein Teil durch ein Fenster 5a des Einstellrings 5 sichtbar ist, um dessen Drehstellung anzuzeigen.

Hier sind das Gehäuse 3, der Einstellring 5, der Ringkörper 9, der Mühlenkopf 7 und auch der Skalierungsring 43 jeweils einstückig aus Kunststoff spritzgegossen. Grundsätzlich bestünde aber auch die Möglichkeit, zumindest einige dieser Bauteile aus Metall, etwa Edelstahl, anzufertigen.

## Patentansprüche

1. Mühle mit einem Gehäuse (3, 9) zur Aufnahme von Mahlgut, insbesondere Gewürz, und einem an einem Ende des Gehäuses (3) angeordneten Mahlwerk (29), das über eine Spindel (15) mit einem am anderen Ende des Gehäuses (3) angeordneten Mühlenkopf (7) antreibbar ist, wobei eine von gegenüberliegenden Umfangsflächen des Gehäuses (3, 9) und des Mühlenkopfs (7) mit einer Umfangsnut (11) versehen ist, in die zumindest eine von der anderen gegenüberliegenden Umfangsfläche (21 a) vorstehende Nase (23) eingreift, um den Mühlenkopf (7) an dem Gehäuse (3, 9) drehbar zu halten, und von der Umfangsnut (11) zumindest ein sich axial öffnender Durchgang (13) wegführt, der zum Abnehmen des Mühlenkopfs (7) von dem Gehäuse (3, 9) den Durchtritt der Nase (23) erlaubt,
**dadurch gekennzeichnet, dass** der Durchgang (13) eine sich schräg zur Umfangsnut (11) erstreckende Gewindenut (13) bildet, in der durch Drehung des Mühlenkopfs (7) die Nase (23) in die und aus der Umfangsnut (11) geführt wird.

2. Mühle nach Anspruch 1, **dadurch gekennzeichnet, dass** die Drehrichtung, mit der die Nase (23) in die Umfangsnut (11) hineingeführt wird, der Hauptmahldrehrichtung des Mahlwerks.(29) entspricht.

3. Mühle nach Anspruch 1 oder 2, **dadurch gekennzeichnet, dass** - im achsenthaltenen Längsschnitt der Mühle (1) betrachtet - die Querschnitte der Nase (23), der Umfangsnut (11) und der Gewindenut (13) im Wesentlichen gleich sind.

4. Mühle nach einem der Ansprüche 1 bis 3, **dadurch gekennzeichnet, dass** die Nase (23) zwei parallel achsnormal ausgerichtete erste Führungsflächen (23a, 23b) zum Eingriff mit der Umfangsnut (11) und zwei parallel schräg ausgerichtete zweite Führungsflächen (23c, 23d) zum Eingriff mit der Gewindenut (13) aufweist.

5. Mühle nach Anspruch 4, **dadurch gekennzeichnet, dass** eine in Umfangsrichtung erstreckende Scheitellinie (23e) der Nase (23) glattgängig oder flachwinklig in die Fläche (21 a), von der die Nase (23) vorsteht, übergeht.

6. Mühle nach einem der Ansprüche 1 bis 5, **dadurch gekennzeichnet, dass** über den Umfang der Mühle (1) eine Mehrzahl von Nasen (23) und eine entsprechende Mehrzahl von Gewindenuten (13) verteilt sind.

7. Mühle nach einem der Ansprüche 1 bis 6. **dadurch gekennzeichnet, dass** die zumindest eine Nase (23) von einer Umfangsschürze (21) radial vorsteht, welche beim Aufsetzen des Mühlenkopfs (7) auf das Gehäuse (3, 9) mit dem Umfang des die Umfangsnut (11) tragenden Bauteils (9) in Eingriff tritt, bevor die Nase (23) in die Gewindenut (13) gelangt.

8. Mühle nach einem der vorhergehenden Ansprüche, **dadurch gekennzeichnet, dass** die Spindel (15) mit dem Mühlenkopf (7) axial verschiebbar aber drehfest in Eingriff steht.

9. Mühle nach einem der vorhergehenden Ansprüche, **dadurch gekennzeichnet, dass** die Spindel (15) nahe dem Mühlenkopf (7) an dem Gehäuse (3, 9) über zumindest ein Stützelement (25) radial abgestützt ist.

10. Mühle nach Anspruch 9, **dadurch gekennzeichnet, dass** sich zwischen den umfangsmäßig verteilten Stützelementen (25) Öffnungen (27) zum Einfüllen von Mahlgut befinden.

11. Mühle nach einem der vorhergehenden Ansprüche, **dadurch gekennzeichnet, dass** die Umfangsnut (11) in der Außenumfangsfläche des Gehäuses (3, 9) und die zumindest eine Nase (23) von einer Innenumfangsfläche einer das Gehäuse (3, 9) übergreifenden Umfangsschürze (21) des Mühlenkopfs (7) vorsteht.

12. Mühle nach Anspruch 11, **dadurch gekennzeichnet, dass** das Gehäuse (3, 9) ein ggf. durchsichtiges Mantelrohr (3) aufweist, mit dessen einem Ende das Mahlwerk (29) einstellbar verbunden ist und mit dessen anderem Ende ein die Umfangsnut (11) und ggf. das Stützelement (25) für die Spindel (25) aufweisender Ringkörper (9) fest verbunden ist.

13. Mühle nach einem der vorhergehenden Ansprüche, **dadurch gekennzeichnet, dass** das Mahlwerk (29) einen Mahlkegel (33) aufweist, der in einen am Gehäuse (3, 9) drehfest gehaltenen Mahlring (31) eintaucht und der zur Einstellung der Eintauchtiefe und somit des Mahlspalts (25) relativ zum Mahlring (31) axial verlagerbar ist.

14. mühle nach Anspruch 13, **dadurch gekennzeichnet, dass** in einem Einstellring (5), der mit dem einen Ende des Gehäuses (3, 9) in Gewindeeingriff (41) steht - und bevorzugt zugleich eine Standfläche für die Mühle (1) bildet - der Mahlkegel (33) relativ drehbar aber axial fest gelagert ist, so dass durch relative Verdrehung des Einstellrings (5) zum Gehäuse (3, 9) der Mahlkegel (33) axial verlagert und hierdurch der Mahlspalt (35) eingestellt wird.

## Claims

1. Mill comprising a housing (3, 9) for holding grindable material, in particular spices, and a grinder (29) arranged at one end of the housing (3), which grinder can be driven by a spindle (15) with a grinding head (7) arranged at the other end of the housing (3), wherein one of the opposite peripheral faces of the housing (3, 9) and the grinding head (7) is provided with a peripheral groove (11), with which at least one nose (23) projecting from the other opposite peripheral face (21 a) engages, in order to hold the grinding head (7) rotatably on the housing (3, 9), and at least one axially opening channel (13) leads away from the peripheral groove (11), which channel allows the passage of the nose (23) for the removal of the grinding head (7) from the housing (3, 9), **characterised in that** the channel (13) forms a threaded groove (13) extending obliquely to the peripheral groove (11), in which threaded groove the nose (23) is guided into and out of the peripheral groove (11) by means of the rotation of the grinding head (7)

2. Mill according to claim 1, **characterised in that** the rotational direction in which the nose (23) is guided into the peripheral groove (11) corresponds to the main grinding rotational direction of the grinder (29).

3. Mill according to claim 1 or 2, **characterised in that** - as viewed in the axial longitudinal section of the mill (1) - the cross sections of the nose (23), the peripheral groove (11) and the threaded groove (13) are essentially the same.

4. Mill according to one of claims 1 to 3, **characterised in that** the nose (23) comprises two parallel axially normal aligned first guiding faces (23a, 23b) for engaging with the peripheral groove (11) and two parallel obliquely aligned second guiding faces (23c, 23d) for engaging with the threaded groove (13).

5. Mill according to claim 4, **characterised in that** an apex line (23e) of the nose (23) extending in peripheral direction passes at a flat or low angle into the face (21 a) from which the nose (23) projects.

6. Mill according to one of claims 1 to 5, **characterised in that** a plurality of noses (23) and a corresponding number of threaded grooves (13) are distributed over the circumference of the mill (1).

7. Mill according to one of claims 1 to 6, **characterised in that** the at least one nose (23) projects radially from a peripheral apron (21), which when placing the grinding head (7) onto the housing (3, 9) engages with the circumference of the component (9) supporting the peripheral groove (11) before the nose (23) reaches into the threaded groove (13).

8. Mill according to one of the preceding claims, **characterised in that** the spindle (15) is in engagement with the grinding head (7) so as to be axially displaceable but also non-rotatable.

9. Mill according to one of the preceding claims, **characterised in that** the spindle (15) is supported radially close to the grinding head (7) on the housing (3, 9) by at least one support element (25).

10. Mill according to claim 9, **characterised in that** between the peripherally distributed support elements (25) there are openings (27) for filling with grindable material.

11. Mill according to one of the preceding claims, **characterised in that** the peripheral groove (11) in the outer peripheral face of the housing (3, 9) and the at least one nose (23) projects from an inner peripheral face of a peripheral apron (21) of the grinding head (7) gripping over the housing (3, 9).

12. Mill according to claim 11, **characterised in that** the housing (3, 9) comprises a possibly transparent casing tube (3), at one end of which the grinder (29) is connected adjustably and at the other end of which an annular body (9) comprising the peripheral groove (11) and possibly the support element (25) for the spindle (25) is securely connected.

13. Mill according to one of the preceding claims, **characterised in that** the grinder (29) comprises a grinding cone (33), which dips into a grinding ring (31) held non-rotatably on the housing (3, 9) and which is axially displaceable relative to the grinding ring (31) for adjusting the immersion depth and thus the grinding gap (25).

14. Mill according to claim 13, **characterised in that** in an adjusting ring (5), which is in threaded engagement (41) with one end of the housing (3, 9) - and preferably forms at the same time a standing surface for the mill (1) - the grinding cone (33) is mounted to be relatively rotatable but axially secure, so that by means of a rotation of the adjusting ring (5) relative to the housing (3, 9) the grinding cone (33) is displaced axially and in this way the grinding gap (35) is adjusted.

## Revendications

1. Moulin comportant un boîtier (3, 9) pour la réception de la matière à moudre, notamment d'épices, et comportant un rouage de moulin (29) disposé à une extrémité du boîtier (3), qui peut être actionné avec une tête de moulin (7) disposée au niveau de l'autre extrémité du boîtier par l'intermédiaire d'une broche (15), sachant qu'une des surfaces circonférentielles se faisant face du boîtier (3, 9) et de la tête de moulin (7) est pourvue d'une rainure circonférentielle (11), dans laquelle s'engrène au moins un nez (23) qui est en saillie par rapport aux autres surfaces circonférentielles (21a) se faisant face, pour garder la tête de moulin (7) en état de tourner sur le boîtier (3, 9), et sachant qu'au moins un passage (13) s'ouvrant axialement s'éloigne de la rainure circonférentielle (11), lequel passage permet, pour le démontage de la tête de moulin (7) du boîtier (3, 9), la traversée du nez (23), **caractérisé en ce que** le passage (13) forme une rainure filetée (13) qui s'étend de manière oblique par rapport à la rainure circonférentielle (11), le nez (23) entrant dans et sortant de la rainure circonférentielle (11) par la rotation de la tête de moulin.

2. Moulin selon la revendication 1, **caractérisé en ce que** le sens de rotation, dans lequel le nez (23) est introduit dans la rainure circonférentielle (11) correspond au sens de rotation de moulure principal du rouage de moulin (29).

3. Moulin selon la revendication 1 ou 2, **caractérisé en ce que** - vu selon une coupe longitudinale du moulin (1) contenant l'axe - les coupes transversales du nez (23), de la rainure circonférentielle (11) et de la rainure filetée (13) sont sensiblement égales.

4. Moulin selon l'une quelconque des revendications 1 à 3, **caractérisé en ce que** le nez (23) présente deux premières surfaces de guidage (23a, 23b) orientées de manière parallèle à l'axe pour l'engrenage avec la rainure circonférentielle (11) et deux secondes surfaces de guidage (23c, 23d) orientées de manière oblique et parallèle pour l'engrenage avec la rainure filetée (13).

5. Moulin selon la revendication 4, **caractérisé en ce que** la ligne de sommet (23e) du nez (23), qui s'étend dans la direction circonférentielle, passe par passage lisse ou angle plat dans la surface (21a), de laquelle fait saillie le nez (23).

6. Moulin selon l'une quelconque des revendications 1 à 5, **caractérisé en ce qu'**une pluralité de nez (23) et une pluralité correspondante de rainures filetées (13) sont réparties sur la circonférence du moulin (1).

7. Moulin selon l'une quelconque des revendications 1 à 6, **caractérisé en ce que** ledit au moins un nez (23) fait saillie de manière radiale par rapport à un tablier circonférentiel (21), lequel, lors de la pose de la tête de moulin (7) sur le boîtier (3, 9), s'engrène avec la périphérie du composant (9) portant la rainure circonférentielle (11), avant que le nez (23) n'atteigne la rainure filetée (13).

8. Moulin selon l'une quelconque des revendications précédentes, **caractérisé en ce que** la broche (15) s'engrène avec la tête de moulin (7) de manière à pouvoir se déplacer de manière axiale tout en résistant à la torsion.

9. Moulin selon l'une quelconque des revendications précédentes, **caractérisé en ce que** la broche (15) est supportée de manière radiale par au moins un élément de support (25) à proximité de la tête de moulin (7) sur le boîtier (3, 9).

10. Moulin selon la revendication 9, **caractérisé en ce que**, des ouvertures (27) pour le remplissage avec la matière à moudre se trouvent entre les éléments de support (25) répartis sur la circonférence.

11. Moulin selon l'une quelconque des revendications précédentes, **caractérisé en ce que** la rainure circonférentielle (11) fait saillie dans la surface circonférentielle extérieure du boîtier (3, 9) et ledit au moins un nez (23) fait saillie d'une surface circonférentielle intérieure d'un tablier circonférentiel (21) de la tête de moulin (7) qui s'engrène sur le boîtier (3, 9).

12. Moulin selon la revendication 11, **caractérisé en ce que** le boîtier (3, 9) présente le cas échéant une gaine (3) transparente, à une extrémité de laquelle le rouage de moulin (29) est relié de manière réglable et à l'autre extrémité de laquelle est relié de manière fixe un corps annulaire (9) présentant la rainure circonférentielle (11) et, le cas échéant, l'élément de support (25) pour la broche (25).

13. Moulin selon l'une quelconque des revendications précédentes, **caractérisé en ce que** le rouage de moulin (29) présente un cône broyeur (33), qui plonge dans un anneau broyeur (31) maintenu sur le boîtier (3, 9) de manière à résister à la torsion et qui peut être déplacé de manière axiale par rapport à l'anneau broyeur (31) pour le réglage de la profondeur de plongée et, de ce fait, pour le réglage de l'écart des éléments broyeurs (35).

14. Moulin selon la revendication 13, **caractérisé en ce que** dans un anneau de réglage (5), qui est en engrenage fileté (41) avec une extrémité du boîtier (3, 9) - et qui forme de préférence en même temps une surface de niveau pour le moulin (1) -, le cône broyeur (33) est déplacé en pouvant subir une rotation relative tout en restant fixe axialement, de sorte que par une rotation relative de l'anneau de réglage (5) par rapport au boîtier (3, 9), le cône de broyage (33) est déplacé de manière axiale, ce qui permet de régler l'écart des éléments broyeurs (35).
